(19) Europäisches Patentamt
European Patent Office
Office européen des brevets

(11) **EP 1 619 834 B1**

(12) **EUROPEAN PATENT SPECIFICATION**

(45) Date of publication and mention
of the grant of the patent:
**17.01.2007  Bulletin 2007/03**

(51) Int Cl.:
***H04L 12/56*** *(2006.01)*

(21) Application number: **04017532.5**

(22) Date of filing: **23.07.2004**

(54) **Method for transmitting data packets between nodes of a communication network**

Verfahren zur Übertragung von Datenpacketen zwischen Knoten in einem Kommunikationsnetz

Procédé de transmission des paquets de données entre noeuds d' un réseau de communication

(84) Designated Contracting States:
**DE FR GB IT**

(43) Date of publication of application:
**25.01.2006  Bulletin 2006/04**

(73) Proprietor: **SIEMENS AKTIENGESELLSCHAFT**
**80333 München (DE)**

(72) Inventor: **De Vega Rodrigo, Miguel**
**1200 Woluwe St. Lambert**
**Brussels (BE)**

(56) References cited:
**US-A1- 2002 154 360          US-A1- 2004 120 276**

**Description**

The invention concerns a method according to the preamble of claim 1 and a node of a network.

In networks, like Optical Burst-Switched (OBS) networks or optical networks, packets, e.g. Internet Protocol (IP) packets, Asynchrony Transfer Mode (ATM) cells or protocol data units (PDUs), are aggregated to bursts, like electrical or optical bursts, in order to be transferred through the network. The conversion of packets into bursts takes place in a node, like an ingress or edge node, of the network according to a certain aggregation strategy.

The process of sending a burst, like an optical burst, in a network, like an OBS network, is described as follows:

First: Accumulate incoming packets, like IP packets, in an aggregation buffer of the node, until the burst is formed.

Second: Send a header of the burst through the network containing information regarding the burst length.

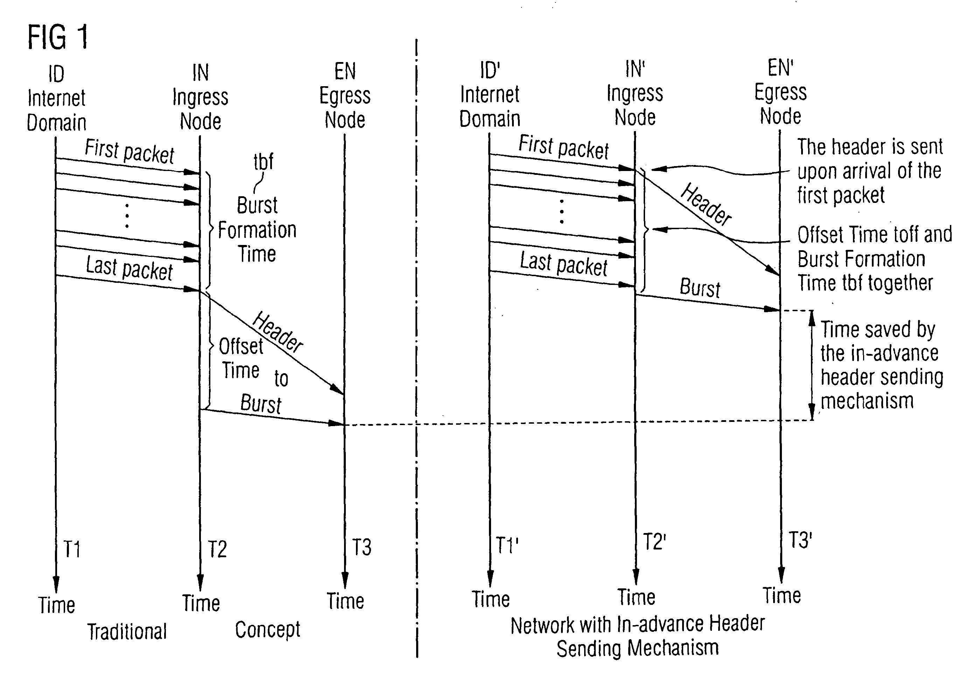

Third: Wait an offset time and send the burst. The offset time is necessary to prepare the switched paths in the nodes in order to transmit the burst from an ingress to an egress node. This offset time is network and node dependent. This process will be described in detail in conjunction with the embodiment by means of figure 1 left side.

According to this process, the delay experienced by a packet which is sent through a network can be therefore in the order of microseconds or even milliseconds, although the network might operate at speeds of Gbps. Consequently the delays derived from the use of burst switched networks can be unacceptable for many delay-sensitive applications.

A process to send packets in bursts can be found in document US 2002/0154360.

It is therefore an object of the present invention to reduce the delay of a packet, which is transmitted via a burst switching network.

This object is achieved by a method with the features of claim 1 or a node with the features of claim 12.

The basic idea is to send the header of the burst to the network before the aggregation of the burst is completed. This has the advantage, that the delay of a packet transmitted via a burst and a burst switching network respectively is less than the delay of a packet transmitted via the traditional method.

Further developments of the invention are identified in subclaims.

In an embodiment of the invention the header of the burst is send immediately to the network when receiving a certain number of packets of a burst, instead of waiting until the burst is completed according to the traditional method. This has the advantage that according to the incoming average packet rate of the certain number of packets a burst length can be calculated and the delay of the packet is reduced, according to the invention.

In an embodiment of the invention the header of the burst is send immediately to the network when receiving the first packet of a burst. This has the advantage, that the lowest possible delay for a packet is achieved. (The offset time is started by sending the header. The burst is send after expiration of the offset time.)

In another embodiment of the invention, a new header is send immediately when the length of a burst exceeds the previously calculated length. This has the advantage, that the lowest possible delay is achieved for the following packets.

An exemplary embodiment of the invention is described in greater detail below with reference to a drawing.

Shown in the drawing are:

Fig. 1 schematic diagram of the traditional and in advance header sending mechanism.

Fig. 2 a flowchart of a node using the inventive method.

Fig. 3 schematic diagram of the traditional and in advance header sending mechanism in conjunction with the two-way reservation concept.

Fig. 4 a flowchart of a node using the inventive method in conjunction with the two-way reservation concept.

On the left side of Fig. 1 a schematic diagram of the traditional header sending mechanism method is shown with 3 time lines T1, T2, T3. Time line T1 is associated with an internet domain ID. Time line T2 is associated with an ingress node IN of a not shown optical burst switching network. Time line T3 is associated with an egress node EN of said optical burst switching network.

A number of packets, like IP packets, from the internet domain ID arrive at the ingress node IN. There said packets will be aggregated to a burst. The aggregation time is also called burst formation time tbf. After aggregation of the burst the burst length bl or burst duration is determined and a header, like an optical header, is sent to the egress node EN containing the determined burst length bl or burst duration. After or while sending the header an offset time toff starts in the ingress node IN and after expiration of the offset time to the (optical) burst is sent to the egress node EN.

The average delay experienced by a packet according to the described traditional method is:

$$Delay_{traditional} = burst\ formation\ time\ /\ 2 + offset\ time$$

On the right side of Fig. 1 a schematic diagram of the inventive in advance header sending mechanism method is shown with 3 time lines T1', T2', T3'. Time line T1' is associated with the internet domain ID'. Time line T2' is associated with an ingress node IN' of a not shown optical burst switching network. Time line T3' is associated with an egress node EN' of said optical burst switching network.

A number of packets, like IP packets, from the internet domain ID' arrive at the ingress node IN'. There said packets will be aggregated to a burst. After receiving a certain number of packets - e.g. the first packet, the third packet, the tenth packet, ... - an estimation of the length or the duration of the burst is calculated and a (optical) header is sent to the egress node EN' containing the calculated (estimated) burst length bl or burst duration. While or after the sending of the header an offset time toff starts and after expiration of said offset time, which now defines the end of the burst formation time, the aggregation is stopped and from the ingress node IN' the (optical) burst is sent to the egress node EN'. The burst formation time is at least partially overlapped by the offset time. The difference between the burst formation time tbf and the offset time toff is given by the time difference of the arriving of the first packet and the starting point of the offset time. In case the offset time starts by arriving of the first packet, the burst formation time tbf is equal to the offset time toff.

The average delay experienced by a packet according to the new inventive in advance header sending method is:

$$Delay_{new} = burst\ formation\ time\ /\ 2 = tbf\ /\ 2$$

If the offset time starts with the arriving of the first packet, the average delay is:

$$Delay_{new} = offset\ time\ /\ 2 = toff\ /\ 2$$

With the inventive method the delay is approximately less than half of the delay of a traditional burst switching network.

In the example of Fig. 1 the (optical) header travels slower than the (optical) burst due to the fact that in each (optical) node, e.g. switch, the (optical) header has to be processed (in the electrical domain), in order due to prepare the interconnection for the burst.

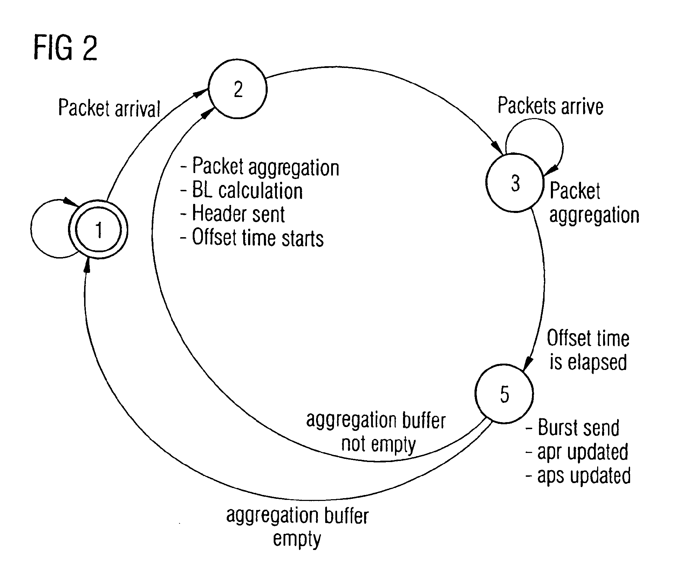

A detailed mechanism description is provided in Fig. 2 with a flowchart of a finite state automat that governs the functioning of an ingress respectively edge node.

The initial state of the automat is an idle state 1, where no action is performed. Upon arrival of a certain number of (IP) packets the automat moves to state 2, where the packets are aggregated, the burst length bl or burst duration is estimated/calculated, the (optical) header is sent through the (OBS) network with an estimation of the burst length or duration and the offset time starts while or after sending the header. Packets will be aggregated at the ingress node - according to state 3 - until the offset time is elapsed and the burst will be sent subsequently - state 4. The burst length or duration is calculated as the amount of packets or bits that are expected to arrive during this period. The bursts will not have always the same size as announced in the header, sometimes they will be bigger and sometimes smaller. If a burst has accumulated more packets or bits than expected during the offset time, only the announced burst length / amount of packets or bits in the header $B_{announced}$ will be transferred, and the rest will remain in the aggregation buffer and a new header will be sent immediately which is shown as change from state 4 to state 2. In case the aggregation buffer is empty after sending the burst, there is a change from state 4 to state 1. In state 4 a measurement, calculation or estimation of the average packet rate apr or average packet size aps can be done. So the stored values for the average packet rate apr and average packet size aps used by the calculation of the burst length or duration can be updated according to behaviour/properties of the last incoming packet stream.

In order to estimate the amount of packets or bits arriving at the ingress or edge node during the offset time, two cases have to be identified:

Case 1: the aggregation buffer is empty or was emptied after sending the last burst. This means (see Fig. 2) that the header will be sent upon arrival of a certain number n of (IP) packets, and only after this moment the edge node will wait an offset time before sending the burst. This means that when this timer starts to count, there is already a certain number n of packets in the buffer. Therefore the estimated burst length is:

$$bl = \left[ n + apr \cdot toff \right] \cdot aps \qquad \text{Equation 1}$$

where:

bl      burst length
n      number of arrived packets
apr      average packet arrival rate
toff      offset time
aps      average packet size, i.e. tri-modal distribution

In case, the header will be sent upon arrival of the first packets, the timer might start to count when there is the first packet in the buffer. The estimated burst length is:

$$bl = \left[ 1 + apr \cdot toff \right] \cdot aps \qquad \text{Equation 1a}$$

Case 2: the aggregation buffer was not emptied after sending the last burst and has a residual amount of $B_{residual}$ bits. This means according to Fig. 2 (change from state 4 to state 2) that the header was immediately sent without waiting for a succeeding packet to arrive and the offset time starts again. The estimated burst length is:

$$bl = apr \cdot toff \cdot aps + B_{residual} \qquad \text{Equation 2}$$

Depending on weather the edge node is in case 1 or 2, a burst length given by equation 1 or equation 2 respectively will be announced in the header.

In other words, after the header is sent the edge node adds the incoming/succeeding packets to the burst which is being generated in the aggregation buffer, until the offset time toff elapses. Then the burst is sent and the packet arrival rate apr and average packet size aps is updated (state 4). The maximum size of the burst is equal to the burst length bl announced in the optical header. Should the buffer contain less than this amount, the buffer will be emptied. Otherwise, the residual bits will be kept in the buffer, a segmentation of the last packet in the burst will probably take place, and a new optical header will be immediately generated and sent.

The edge node on the receiver side respectively egress node will reassembly the last packet of a burst if it was segmented, by simply recovering the second half of the packet at the beginning of the next burst that arrives from the same edge node.

The inventive method can be used in a two-way reservation network, like a two-way reservation optical burst switching network. In these networks the burst waits in the ingress node until the header travels to the destination edge node respectively egress node and comes back informing the ingress node of weather the burst will be blocked or not in the network. If no blocking will take place the burst is sent, since the header has already reserved the correspondent switching times in the switches along the path through the network. Otherwise, the burst is not sent, but instead another optical header is sent to the destination and the process is repeated.

The main advantage of this architecture is that it leads to blocking-free networks. However there is a design dilemma. Making the bursts small (and assuming a constant packet arrival rate), increases the amount of bursts in the network. Since for every burst a header has to be sent to the destination/egress node and back to the source/ingress node, the signalling overhead increases excessively. Making the bursts big would be in principle the right decision, since it leads to a higher multiplexing gain, but it also increases the burst formation time and consequently the packet delay, which can be simply unacceptable for many applications. The excessive delay makes it difficult to find a practical use for two-way reservation networks.

A solution is to use the inventive method with the in-advance header sending mechanism. The burst is formed while the header travels back and forth through the OBS network. The header round trip time RTT will be considerable, since the processing time in the switches takes a while. Therefore, bursts will have enough time to grow big in the edge nodes while the header returns from its trip. Consequently the solution provides the advantage that it allows to send big bursts (increased multiplexing gain) while reducing the packet delay drastically.

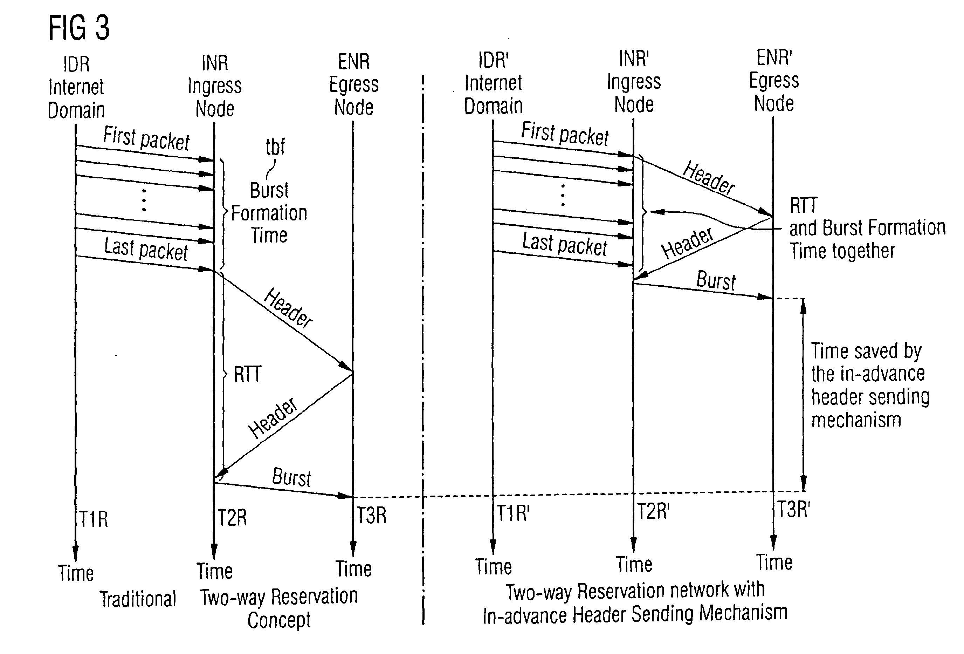

Fig. 3 explains intuitively the advantages of the in-advance header sending mechanism in two-way reservation (OBS) networks. On the left side of Fig. 3 a schematic diagram of the traditional header sending mechanism method in a two-way reservation network is shown with 3 time lines T1R, T2R, T3R. Time line T1R is associated with an internet domain IDR. Time line T2R is associated with an ingress node INR of a not shown optical burst switching network. Time line T3R is associated with an egress node ENR of said optical burst switching network. A number of packets, like IP packets, from the internet domain IDR arrive at the ingress node INR. There said packets will be aggregated to a burst. The aggregation time is also called burst formation time tbf. After aggregation of the burst the burst length bl or burst duration is determined and a header, like an optical header, is sent to the egress node ENR containing the determined burst length bl or burst duration. The header reserves a path in the network while travelling to the egress node ENR. After arriving in the egress node ENR and successfully reservation of the path the header is sent back from the egress node ENR to the ingress node INR, in order to inform the ingress node INR that a path is successfully reserved. After arriving of the header in the ingress node INR the burst is sent to the egress node ENR. The travel time of the header from the ingress node INR to the egress node ENR and back is called round trip time RTT.

The average delay experienced by a packet according to the described traditional method of the two-way reservation concept is:

$$DelayR_{traditional} = burst\ formation\ time\ /\ 2\ +\ round\ trip\ time$$
$$= tbf/2\ +\ RTT$$

In case, the burst formation time is approximately equal to the round trip time, the average delay is:

$$DelayR_{traditional} = RTT/2 + RTT = 1.5 * RTT$$

On the right side of Fig. 3 a schematic diagram of the inventive in advance header sending method used in conjunction with the two-way reservation concept is shown with 3 time lines T1R', T2R', T3R'. Time line T1R' is associated with the internet domain IDR'. Time line T2R' is associated with an ingress node INR' of a not shown (optical) burst switching network. Time line T3R' is associated with an egress node ENR' of said burst switching network. A number of packets from the internet domain IDR' arrive at the ingress node INR'. There said packets will be aggregated to a burst. After receiving a certain number of packets n - e.g. the first packet, the third packet, the tenth packet, ... - an estimation of the length or the duration of the burst is calculated and subsequently a header is sent to the egress node ENR' containing the calculated (estimated) burst length bl or burst duration. When or after the header is sent, a counter or timer is started, which uses the expected round trip time RTT analogue as the offset time toff as in the example of Fig. 1. The header reserves a path in the network while travelling to the egress node ENR'. After arriving in the egress node ENR' and successful reservation of the path the header is sent back from the egress node ENR' to the ingress node INR', in order to inform the ingress node INR' that a path is successfully reserved. After expiring of the expected round trip time RTT in the timer the aggregation is stopped. After arriving of the header in the ingress node INR' the burst is sent to the egress node ENR'. The value of the round trip time of the header is measured continuously and an average value for the expected round trip time is updated and stored.

In order to calculate or estimate the burst length / amount of packets or bits in the burst, an analogue formula as described for Fig. 1 will be used. In this case the offset time is replaced by the round trip time.

$$bl = \left[n + apr \cdot RTT\right] \cdot aps \qquad\qquad \text{Equation 3}$$

where:

bl      burst length
n      number of arrived packets
apr      average packet arrival rate
RTT      round trip time
aps      average packet size, i.e. tri-modal distribution

In case, the header will be sent upon arrival of the first packets, the timer might start to count when there is the first packet in the buffer. The estimated burst length is:

$$bl = \left[1 + apr \cdot RTT\right] \cdot aps \qquad \text{Equation 3a}$$

Analogue to the description of Fig. 1 and 2 in case the aggregation buffer was not emptied after sending the last burst and has a residual amount of $B_{residual}$ bits, the burst length is calculated by:

$$bl = apr \cdot RTT \cdot aps + B_{residual} \qquad \text{Equation 4}$$

The average delay experienced by a packet according to the inventive method applied in a two-way reservation network is:

$$DelayR_{new\ mechanism} = Burst\ Formation\ Time\ /\ 2$$

In case the header is sent after arriving of the first packet, the burst formation time is equal to the round trip time. The delay will be:

$$DelayR_{new\ mechanism} = RTT\ /\ 2 = 0.5 * RTT$$

As it can be seen, in two-way reservation networks a packet might experiences three times less delay if the inventive in-advance header sending mechanism is used.

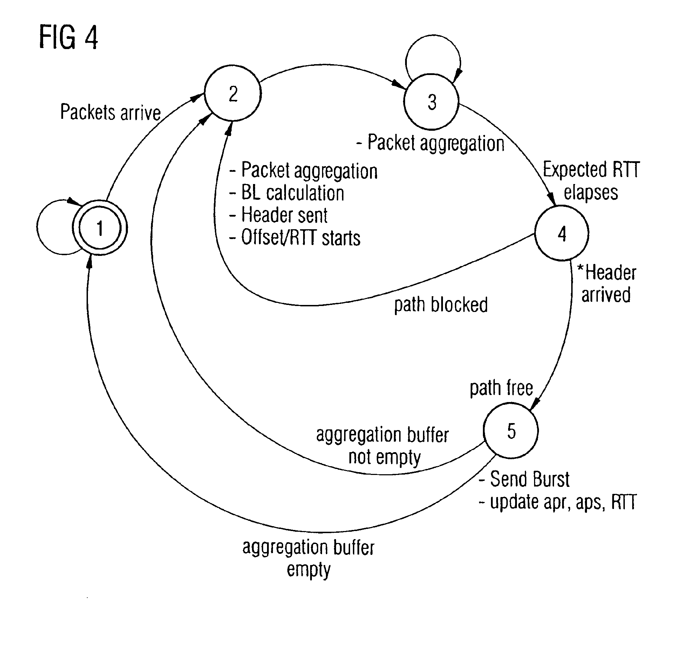

Fig. 4 shows a flowchart of a node using the inventive method in conjunction with the two-way reservation concept. In Fig. 4 a flowchart analogue to Fig. 2 is shown. The difference is, that after the round trip time elapses the aggregation is stopped and a check is performed, if the header is arrived - state 4. In case the header has arrived, the path is free and the burst will be send, which is shown as change from state 4 to state 5. In state 5 the burst is sent and the values for the average packet rate apr, average packet size aps and round trip time RTT are updated. If the header has not arrived, the path is blocked and a new header is sent, which is shown as change from state 4 to state 2. Consequently a new header will be sent in state 2.

If the aggregation buffer is empty after sending the burst there is a change from state 5 to state 1. In case the aggregation buffer is not empty there is a change from state 5 to state 2, where a new header will be sent - analogue to the description of Fig. 2.

In the following an example will be calculated. Suppose we have an OBS system that uses two-way reservation with the in-advance header sending mechanism. The system has to transport IP packets. Each edge node (ingress respectively egress node) is connected on the optical side to a 16*10 Gbps optical fiber (16 wavelengths). Assume that the header processing time in each optical node respectively switch is $t_{processing} = 10\,\mu s$ (optic/electric/optic transformation + switching time), and that there are 10 optical nodes/switches between two given edge nodes. Therefore the time required for an optical header to travel from one edge node to the other and back - round trip time RTT - is approximately given by:

$$RTT = 10*10\mu s\ (travelling\ 10\ nodes\ to\ the\ destination) +$$
$$10*10\mu s\ (travelling\ 10\ nodes\ to\ the\ source) = 200\ \mu s.$$

Let's calculate how many packets or bits are accumulated for a given edge node destination during these 200 $\mu$s. Assuming a realistic distribution of packet sizes, according to the tri-modal distribution the average IP packet size is *aps* = 3735 *bits* .

The average packet rate apr may be proportional to the speed of the link (160 Gbps). Assume that there are 16 possible destinations (edge nodes) and that the traffic is equally distributed among them. For a given destination, we have $apr = 10\ [Gbps]\ /\ 3735\ [bits/packet] = 2677.4\ *10^3\ packets\ /\ s.$ Therefore, in 200 $\mu$s a number of $2677.4\ *10^3\ *\ 200\ /\ 10^6 = 535.48\ IP\ packets$ are sent in a burst, which is a recommendable number since it ensures a high multiplexing gain. In average, an IP packet has to wait 200 $\mu$s / 2 = $100\ \mu s$ in order to be transferred in a burst, if the header is sent by arriving of the first packet. Without the in-advance header sending mechanism, if we want to send bursts with 535 IP packets in average, an IP packet has to wait 200 $\mu$s / 2 (until the burst is generated) + $T_{RTT}$ (which is 200 $\mu$s) = $300\ \mu s$, which is three times bigger as discussed.

Compendious a packet experiences a delay less than the half than in a normal burst switching network and three times less delay in a two-way reservation burst switching network. The performance for TCP connection over burst switching networks will be improved. The method does not demand much processing time and can be implemented in software. Using the burst aggregation strategy with timeouts, the offset time should be set equal to the value of the timer.

### Claims

**1.** A method for transmitting data packets between nodes of a communication network, where said packets are aggregated to form a burst in an aggregation buffer of an ingress node, that a header of the burst containing information about the burst length (bl) is sent to a destination node, and after an offset time (toff) the burst is sent to the destination node,
**characterized in that,**
calculating the burst length (bl) and sending the header to the destination node before the aggregation of the burst is completed.

**2.** The method as claimed in claim 1,
**characterized in that,**
the burst length (bl) is calculated after receiving a certain number (n) of packets and the header is transmitted subsequently.

**3.** The method as claimed in claim 2,
**characterized in that,**
the burst length (bl) is calculated after receiving the first packet.

**4.** The method as claimed in claim 1,
**characterized in that,**
after a certain number (n) of packets are aggregated:

- the burst length (bl) is calculated,
- an offset time (toff) begins,
- the header is sent to the destination node and
- after expiring of the offset time (toff) the burst is sent to the destination node.

**5.** The method as claimed in one of claims 1 to 4,
**characterized in that,**
the burst length (bl) is calculated from the average packet size (aps), the average packet rate (apr) and the offset time (toff).

**6.** The Method as claimed in one of claims 1 to 4,
**characterized in that,**
the burst length (bl) is calculated by the product of the average packet size (aps) and a sum, where the sum is calculated by the number of currently aggregated packets (n) plus the product of the average packet rate (apr) and the offset time (toff).

**7.** The Method as claimed in one of claims 1 to 6,
**characterized in that,**
exceeds the real burst length the calculated burst length while aggregating the packets to form a burst, aggregation of the present burst is stopped, odd packets and arriving packets will be aggregated to a new burst and a header of the new burst is sent.

**8.** The method as claimed in claim 7,

**characterized in that,**
the length (bl) of said new burst is calculated by adding the number of the odd packets to the calculated burst length.

9. The Method as claimed in one of claims 1 to 8,
**characterized in that,**
the average packet rate (apr) used for the calculation of the burst length (bl) is continuously calculated.

10. The Method as claimed in one of claims 1 to 9,
**characterized in that,**
that as data packets IP packets are transmitted.

11. The Method as claimed in one of claims 1 to 10,
**characterized in that,**
the method is used in an Optical Burst Switching network.

12. Node of a network comprising means for carrying out the steps of any one of preceding claims.


**Patentansprüche**

1. Verfahren zum Übertragen von Datenpaketen zwischen Knoten eines Kommunikationsnetzes, wobei die besagten Datenpakete in einem Aggregations-Puffer eines Eintrittsknotens aggregiert werden, um ein Burst zu bilden, wobei ein Header des Bursts, welcher Informationen über die Burst-Länge (b1) enthält, an einen Zielknoten gesendet wird und nach einer Versatzzeit (toff) das Burst an den Zielknoten gesendet wird,
**dadurch gekennzeichnet, dass**
das Berechnen der Burst-Länge (b1) und das Senden des Headers an den Zielknoten erfolgt, bevor die Aggregation des Bursts abgeschlossen ist.

2. Verfahren gemäß Anspruch 1,
**dadurch gekennzeichnet, dass**
die Burst-Länge (b1) berechnet wird, nachdem eine bestimmte Anzahl (n) von Datenpaketen empfangen wurde, und der Header danach gesendet wird.

3. Verfahren gemäß Anspruch 2,
**dadurch gekennzeichnet, dass**
die Burst-Länge (b1) berechnet wird, nachdem das erste Datenpaket empfangen wurde.

4. Verfahren gemäß Anspruch 1,
**dadurch gekennzeichnet, dass**
nachdem eine bestimmte Anzahl (n) von Datenpaketen aggregiert wurde:

 - die Burst-Länge (b1) berechnet wird,
 - eine Versatzzeit (toff) zu laufen beginnt,
 - der Header an den Zielknoten gesendet wird und
 - nach Ablauf der Versatzzeit (toff) das Burst an den Zielknoten gesendet wird.

5. Verfahren gemäß einem der Ansprüche 1 bis 4,
**dadurch gekennzeichnet, dass**
die Burst-Länge (b1) anhand der durchschnittlichen Datenpaketgröße (aps), der durchschnittlichen Datenpaketrate (apr) und der Versatzzeit (toff) berechnet wird.

6. Verfahren gemäß einem der Ansprüche 1 bis 4,
**dadurch gekennzeichnet, dass**
die Burst-Länge (b1) berechnet wird als das Produkt aus der durchschnittlichen Datenpaketgröße (aps) und einer Summe, wobei die Summe sich aus der Anzahl der aktuell aggregierten Datenpakete (n) und dem Produkt aus der durchschnittlichen Datenpaketrate (apr) und der Versatzzeit (Toff) ergibt.

7. Verfahren gemäß einem der Ansprüche 1 bis 6,

**dadurch gekennzeichnet, dass**
wenn die tatsächliche Burst-Länge die berechnete Burst-Länge übersteigt, während die Datenpakete aggregiert werden, um ein Burst zu bilden, die Aggregation des aktuellen Bursts beendet wird, überzählige Datenpakete und kommende Datenpakete zu einem neuen Burst aggregiert werden und ein Header des neuen Bursts gesendet wird.

**8.** Verfahren gemäß Anspruch 7,
**dadurch gekennzeichnet, dass**
die Länge (b1) des besagten neuen Bursts berechnet wird, indem die Anzahl der überzähligen Datenpakete der berechneten Burst-Länge hinzugefügt wird.

**9.** Verfahren gemäß einem der Ansprüche 1 bis 8,
**dadurch gekennzeichnet, dass**
die durchschnittliche Datenpaketrate (apr), die für die Berechnung der Burst-Länge (b1) verwendet wird, kontinuierlich berechnet wird.

**10.** Verfahren gemäß einem der Ansprüche 1 bis 9,
**dadurch gekennzeichnet, dass**
als Datenpakete IP-Datenpakete übertragen werden.

**11.** Verfahren gemäß einem der Ansprüche 1 bis 10,
**dadurch gekennzeichnet, dass**
das Verfahren in einem Kommunikationsnetz mit Optical Burst Switching verwendet wird.

**12.** Knoten eines Kommunikationsnetzes, welcher Mittel zur Ausführung der Schritte gemäß einem der vorstehenden Ansprüche enthält.


**Revendications**

**1.** Procédé de transmission de paquets de données entre des noeuds d'un réseau de communication, dans lequel lesdits paquets sont agrégés pour former une salve dans une mémoire tampon d'agrégation d'un noeud d'entrée, un en-tête de la salve contenant une information relative à la longueur de salve (bl) est envoyé vers un noeud de destination et, après un décalage temporel (toff), la salve est envoyée vers le noeud de destination, **caractérisé en ce que** la longueur de salve (bl) est calculée et l'en-tête envoyé au noeud de destination avant que l'agrégation de la salve soit terminée.

**2.** Procédé selon la revendication 1,
**caractérisé en ce que** la longueur de salve (bl) est calculée après réception d'un certain nombre (n) de paquets et l'en-tête est transmis ensuite.

**3.** Procédé selon la revendication 2,
**caractérisé en ce que** la longueur de salve (bl) est calculée après réception du premier paquet.

**4.** Procédé selon la revendication 1,
**caractérisé en ce que**, après l'agrégation d'un certain nombre (n) de paquets:

- la longueur de salve (bl) est calculée,
- un décalage temporel (toff) démarre,
- l'en-tête est envoyé au noeud de destination et
- la salve est envoyée au noeud de destination après expiration du décalage temporel (toff).

**5.** Procédé selon l'une des revendications 1 à 4,
**caractérisé en ce que** la longueur de salve (bl) est calculée à partir de la taille moyenne des paquets (aps), du débit moyen des paquets (apr) et du décalage temporel (toff).

**6.** Procédé selon l'une des revendications 1 à 4,
**caractérisé en ce que** la longueur de salve (bl) est calculée en faisant le produit de la taille moyenne des paquets (aps) et d'une somme, la somme étant le calcul du nombre (n) de paquets actuellement agrégés plus le produit du débit moyen des paquets (apr) et du décalage temporel (toff).

7. Procédé selon l'une des revendications 1 à 6,
**caractérisé en ce que**, si la longueur de salve réelle est supérieure à la longueur de salve calculée pendant l'agrégation des paquets pour former une salve, l'agrégation de la salve actuelle est stoppée, les paquets isolés et paquets arrivants seront agrégés pour former une nouvelle salve et un en-tête de la nouvelle salve est envoyé.

8. Procédé selon la revendication 7,
**caractérisé en ce que** l'on calcule la longueur (bl) de ladite nouvelle salve en ajoutant le nombre de paquets isolés à la longueur de salve calculée.

9. Procédé selon l'une des revendications 1 à 8,
**caractérisé en ce que** le débit moyen des paquets (apr) utilisé pour le calcul de la longueur de salve (bl) est calculé de manière continue.

10. Procédé selon l'une des revendications 1 à 9,
**caractérisé en ce que** des paquets IP sont transmis en temps que paquets de données.

11. Procédé selon l'une des revendications 1 à 10,
**caractérisé en ce que** le procédé est utilisé dans un réseau à commutation de salves optiques.

12. Noeud d'un réseau comprenant un moyen pour exécuter les étapes de l'une quelconque des revendications précédentes.

# FIG 1

**Traditional Concept**

ID Internet Domain — First packet ... Last packet — T1 — Time

IN Ingress Node — First packet ... Last packet — tbf Burst Formation Time — Header — Offset Time to — Burst — T2 — Time

EN Egress Node — T3 — Time

**Network with In-advance Header Sending Mechanism**

ID' Internet Domain — First packet ... Last packet — T1' — Time

IN' Ingress Node — Header — Burst — T2' — Time

EN' Egress Node — The header is sent upon arrival of the first packet — Offset Time toff and Burst Formation Time tbf together — Time saved by the in-advance header sending mechanism — T3' — Time

FIG 2

# FIG 3

IDR
Internet
Domain

INR
Ingress
Node

ENR
Egress
Node

IDR'
Internet
Domain

INR'
Ingress
Node

ENR'
Egress
Node

First packet

tbf

$\left.\vphantom{\begin{array}{c}\\\\\\\\\end{array}}\right\}$ Burst
Formation
Time

Last packet

Header

$\left.\vphantom{\begin{array}{c}\\\\\end{array}}\right\}$ RTT

Header

Burst

First packet

Header

Header

Burst

RTT
and Burst Formation
Time together

Time saved by
the in-advance
header sending
mechanism

T1R

T2R

T3R

T1R'

T2R'

T3R'

Time

Time

Time

Time

Time

Time

Traditional Two-way Reservation
Concept

Two-way Reservation network with
In-advance Header Sending Mechanism

EP 1 619 834 B1

# FIG 4

Packets arrive

- Packet aggregation

- Packet aggregation
- BL calculation
- Header sent
- Offset/RTT starts

Expected RTT
elapses

*Header
arrived

path blocked

path free

aggregation buffer
not empty

- Send Burst
- update apr, aps, RTT

aggregation buffer
empty